# EUROPÄISCHE PATENTSCHRIFT

(11) **EP 1 148 567 B1**
(45) Veröffentlichungstag und Bekanntmachung des Hinweises auf die Patenterteilung: **07.03.2007**
(21) Anmeldenummer: 01108593.3
(22) Anmeldetag: 05.04.2001
(51) Int. Cl.: H01M 8/06, H01M 8/04

(54) **Verfahren zur Verbesserung des Anspringsverhaltens von mobilen Brennstoffzellensystemen**
Method for improving the starting performance of mobile fuel cell systems
Procédé pour améliorer le démarrage de systèmes de piles à combustible mobiles

(30) Priorität: 20.04.2000 DE 10019770
(43) Veröffentlichungstag der Anmeldung: 24.10.2001
(73) Patentinhaber: NuCellSys GmbH, 73230 Kirchheim/Teck-Nabern (DE)
(72) Erfinder: Klein, Christian, 73230 Kirchheim u.T. (DE); Schüssler, Martin, Dr., 89073 Ulm (DE)
(74) Vertreter: Finkele, Rolf

(56) Entgegenhaltungen:
- WO-A-00/04989
- GB-A- 1 479 843
- US-A- 5 527 632

## Beschreibung

Die Erfindung betrifft ein Verfahren zur Verbesserung des Anspringverhaltens beim Kaltstart von katalytisch wirksamen Komponenten in Gaserzeugungssystemen mobiler Brennstoffzellensysteme.

Bei katalytisch wirksamen Komponenten, z.B. einer CO-Oxidationsstufe, in Gaserzeugungssystemen, ist es bekannt, dass bei Temperaturen unterhalb der Betriebstemperatur durch Belegung der katalytisch aktiven Zentren der Start dieser Komponenten erschwert wird. Als problematisch erweist sich hierbei vor allem eine Belegung mit CO oder kondensierenden Bestandteilen wie Wasser oder Treibstoff, 2.B. Methanol, da es zu einer Behinderung des Stofftransports und damit der katalytischen Aktivität in der katalytisch wirksamen Komponente kommen kann. Im Falle des Wassers kann es bei tiefen Temperaturen zu einer Vereisung des Katalysators kommen.

Zur schnellen Aufheizung katalytisch wirksamer Komponenten auf die Betriebstemperatur ist es bekannt, Treibstoff entweder innerhalb oder außerhalb der jeweiligen zu heizenden Komponente zu verbrennen. Eine andere Möglichkeit ist die Verbrennung von Treibstoff in einer weiteren Komponente, die im Wärmekontakt mit der aufzuheizenden Komponente steht.

GB 1,479,843 A offenbart ein Verfahren zum Betreiben einer katalytisch wirksamen Komponente (katalytischer Reformer), das vier Phasen aufweist. Phase 1 ist dabei eine Kaltstartphase (start-up), bei der der Reformer mit Hilfe eines Zwischenspeichers (Trockner) und eines Eduktgasstromes (Kreislaufgas) getrocknet wird. In Phase 2 wird die Reformierung gestartet und der katalytische Reformer weiter getrocknet. In Phase 3 wird die Reformierung weiter betrieben und der Trockner regeneriert. Phase 4 (normal operation) entspricht schließlich dem Routinebetrieb des katalytischen Reformers.
In Phase 1 (Kaltstart) wird ein Kreislaufgas zugeführt, das in einem Trockner, der z.B. mit trockenem Molekularsieb gefüllt ist, getrocknet wird. Das Kreislaufgas wird dabei solange im Kreislauf immer wieder durch den Trockner, den katalytischen Reformer und ggf. weitere Komponenten hindurch geführt, bis seine Feuchtigkeit einen vorbestimmten Wert (25 - 50 ppm) unterschreitet. Der katalytische Reformer und die etwaigen weitere Komponenten werden dabei getrocknet, wobei das Molekularsieb feucht wird.
Ist die Feuchtigkeit des Kreislaufgases auf den vorbestimmten Wert gesunken, beginnt Phase 2. Dabei wird der Trockner vom Kreislauf abgetrennt und die Reformierung gestartet und betrieben, bis sich der Wassergehalt des vom katalytischen Reformer abgegebenen Reformatgases weiter verringert (> 25 ppm) und stabilisiert hat.
Danach beginnt Phase 3. Dabei wird die Reformierung weiter betrieben. Ein Teil des Reformatgases (z.B. Wasserstoff) wird allerdings abgezweigt, verdichtet, aufgeheizt, durch den Trockner hindurchgeführt und schließlich wieder dem katalytischen Reformer zugeführt. Dadurch wird das Molekularsieb getrocknet und der Trockner innerhalb von zwei bis drei Wochen regeneriert.

Ist der Trockner regeneriert, beginnt Phase 4: der stationäre Betrieb des katalytischen Reformers. Dabei ist der Trockner abgetrennt und wird für einen etwaigen weiteren Kaltstart in der Zukunft bereitgehalten.

Aufgabe der Erfindung ist, ein Verfahren zu schaffen, mit dem in Gaserzeugungssystemen mobiler Brennstoffzellensysteme der Kaltstart von katalytisch wirksamen Komponenten schnell und zuverlässig erfolgen kann.

Diese Aufgabe wird durch den Gegenstand des Anspruches 1 gelöst. Vorteilhafte Ausführungen sind Gegenstand weiterer Ansprüche.

Erfindungsgemäß speichert ein direkt im Eduktgasstrom angeordneter Zwischenspeicher während des Kaltstarts startbehindernde Gasbestandteile aus dem Edukt der zu startenden Komponente und schützt diese somit gegen die Belegung mit diesen Bestandteilen. Gespeichert werden können insbesondere CO sowie kondensierende Bestandteile wie Wasser oder Brennstoff, insbesondere Methanol.

Durch die fortschreitende Erwärmung des Systems bei fortdauerndem Betrieb, insbesondere nach Erreichen der Betriebstemperatur (typischerweise 200°C - 300°C), gibt der Zwischenspeicher die gespeicherten Komponenten wieder frei und regeneriert sich somit für den nächsten Kaltstart.

Der Zwischenspeicher übt somit eine Art von Pufferfunktion aus. Er wird deshalb im Folgenden auch als Puffer bezeichnet.

Mittels des erfindungsgemäßen Zwischenspeichers können insbesondere die folgenden Komponenten innerhalb eines Gaserzeugungssystems geschützt werden:
- ein katalytischer Brenner für die Temperierung des Systems;
- ein Reformer zur Brenngaserzeugung für die Brennstoffzelle;
- ein Reaktor für die partielle Oxidation zur Brenngaserzeugung;
- eine CO-Oxidationsstufe oder eine Membran zur Reinigung des Brenngases.

Besonders geeignet ist das erfindungsgemäße Verfahren dabei für den Schutz von solchen Komponenten, bei denen eine exotherme Reaktion abläuft.

Der erfindungsgemäße Puffer kann als Kombination mehrerer Speicherkomponenten ausgeführt werden, wobei die Einzelkomponenten selektiv für die Speicherung eines bestimmten Stoffes geeignet oder optimiert sind.

Darüber hinaus kann der Zwischenspeicher aus Komponenten bestehen, die nach verschiedenen chemisch/physikalischen Speicherprinzipien arbeiten.

In einer bevorzugten Ausführung wird der Zwischenspeicher als Adsorber ausgeführt.

Der Zwischenspeicher ist in einer vorteilhaften Ausführung ein Adsorber mit hoher Oberfläche und Cu-haltigem Trägermaterial, z.B. einem Zeolithen. Weitere geeignete Materialien sind Al₂O₃ oder Aktivkohle. Die genannten Materialien eignen sich besonders vorteilhaft für die Adsorption von CO, können aber auch für die Adsorption von Methanol oder Wasser eingesetzt werden.

Das erfindungsgemäße Verfahren ist besonders nützlich, wenn bei einer vor CO zu schützenden Komponente deren katalytisches Material auf einer metallischen oder keramischen Trägerstruktur (Monolithe, Bleche) befindet, da wegen der hohen Wärmekapazität dieser Strukturen ein Zünden des Katalysators mit CO-haltigem Gas sehr schwierig ist.

Die Erfindung wird nachstehend beispielhaft anhand einer Zeichnung, die den Gasfluß durch den Puffer und durch die zu schützende Komponente innerhalb des Gaserzeugungssystems zeigt, näher beschrieben.

Bezugsziffer **1** bezeichnet den Zwischenspeicher, der direkt im Gasstrom vor einer katalytisch wirksamen Komponente **2,** z.B. einer CO-Oxidationsstufe, angeordnet ist. Der Zwischenspeicher **1** und die katalytisch wirksame Komponente **2** stehen über die Leitung **3** miteinander in Verbindung.

Während des Kaltstarts strömt das Gasgemisch mit Anteilen von CO, Wasser oder Treibstoff in den Puffer **1.** Dort werden die Gasbestandteile, die die katalytische Aktivität der nachgeschalteten Komponente **2** beim Kaltstart behindern, aus dem Gasgemisch entfernt, indem die Gasbestandteile im Puffer **1** gespeichert, z.B. absorbiert, werden. Hinter dem Puffer **1** strömt das Gasgemisch nun mit verringerter Konzentration an CO, Wasser oder Treibstoff durch Leitung **3** in die katalytisch wirksame Komponente **2.** Durch das im Puffer **1** gereinigte Gasgemisch wird der Stofftransport und somit die katalytische Aktivität der Komponente **2** nicht behindert. Ein zuverlässiges Starten der Komponente **2** ist somit gewährleistet.

Während des Betriebs des Gaserzeugungssystems erreicht die katalytisch wirksame Komponente **2** durch die darin ablaufende exotherme Reaktion ihre Betriebstemperatur. Gleichzeitig wird der Puffer **1** vom Eduktgasstrom durchströmt und heizt sich dadurch ebenfalls auf. Aufgrund dieser Temperaturerhöhung setzt der Puffer **1** dann die gespeicherten Bestandteile frei und führt sie dem Gasstrom und somit der nun betriebsbereiten Komponente **2** zu. Der Puffer **1** ist nun wieder aufnahmebereit für den nächsten Kaltstart.

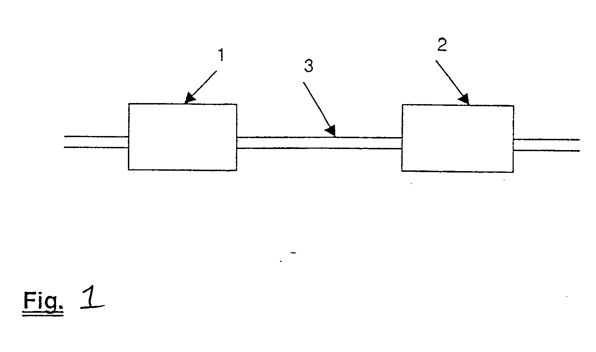

## Patentansprüche

1. Verfahren zur Verbesserung des Anspringverhaltens beim Kaltstart einer katalytisch wirksamen Komponente (**2**) in Gaserzeugungssystemen mobiler Brennstoffzellensystemen, **dadurch gekennzeichnet, dass** ein direkt im Eduktgasstrom angeordneter Zwischenspeicher (**1**) während des Kaltstarts startbehindernde Gasbestandteile aus dem gasförmigen Edukt der zu startenden Komponente (**2**) speichert und dass der Zwischenspeicher (**1**) die in der Kaltstartphase gespeicherten Bestandteile infolge der Erwärmung bei fortdauerndem Betrieb wieder abgibt.

2. Verfahren nach einem der vorangehenden Ansprüche, **dadurch gekennzeichnet, dass** der Zwischenspeicher (**1**) ein Adsorbermaterial enthält.

3. Verfahren nach einem der Ansprüche 1 oder 2, **dadurch gekennzeichnet, dass** der Zwischenspeicher eines oder mehrere der folgenden Materialien enthält: Cu-haltige Materialien, Zeolithe, Al₂O₃, Aktivkohle.

4. Verfahren nach einem der vorangehenden Ansprüche, **dadurch gekennzeichnet, dass** die an dem Zwischenspeicher gespeicherten Gasbestandteile einen oder mehrere der folgenden Stoffe sind: CO, Wasser, Methanol.

5. Verfahren nach Anspruch 4, **dadurch gekennzeichnet, dass** der Zwischenspeicher mehrere Komponenten umfasst, die hinsichtlich einzelner der zu speichernden Gasbestandteile optimiert sind.

6. Verfahren nach einem der vorangehenden Ansprüche, **dadurch gekennzeichnet, dass** die katalytisch wirksame Komponente (**2**) ein katalytischer Brenner, ein Reformer, eine Stufe zur partiellen Oxidation, eine CO-Oxidationsstufe oder eine Membran zur Gasreinigung ist.

## Claims

1. Method for improving the light-off performance when cold-starting a catalytically active component (2) in gas generation systems of mobile fuel cell systems, **characterized in that** a temporary store (1), which is arranged directly in the starting-material gas stream, during the cold start stores gaseous constituents from the gaseous starting material of the component (2) which is to be started which cause problems when starting, and **in that** the temporary store (1) releases the constituents which have been stored during the cold-start phase again as a result of the heating which takes place as operation continues.

2. Method according to one of the preceding claims, **characterized in that** the temporary store (1) contains an adsorber material.

3. Method according to one of Claims 1 or 2, **characterized in that** the temporary store contains one or more of the following materials: Cu-containing materials, zeolites, Al₂O₃, activated carbon.

4. Method according to one of the preceding claims, **characterized in that** the gaseous constituents which are stored at the intermediate store are one or more of the following substances: CO, water, methanol.

5. Method according to Claim 4, **characterized in that** the temporary store comprises a plurality of components which are optimized with regard to individual gaseous constituents which are to be stored.

6. Method according to one of the preceding claims, **characterized in that** the catalytically active component (2) is a catalytic burner, a reformer, a partial oxidation stage, a CO oxidation stage or a membrane for gas cleaning.

## Revendications

1. Procédé en vue de l'amélioration du comportement de démarrage lors du démarrage à froid d'un composant actif du point de vue catalytique (2) dans des systèmes de production de gaz de systèmes de piles combustibles mobiles, **caractérisé en ce qu'**un récipient intermédiaire (1) disposé directement dans le courant de gaz du produit de départ emmagasine lors du démarrage à froid des constituants gazeux empêchant le démarrage provenant du produit de départ gazeux du composant à démarrer (2) et **en ce que** le récipient intermédiaire (1) libère à nouveau, en cas de fonctionnement continu, les constituants emmagasinés au cours de la phase de démarrage à froid à la suite de l'échauffement.

2. Procédé selon l'une quelconque des revendications précédentes, **caractérisé en ce que** le récipient intermédiaire (1) contient un matériau d'agent adsorbant.

3. Procédé selon l'une quelconque des revendications 1 ou 2, **caractérisé en ce que** le récipient intermédiaire contient un ou plusieurs des matériaux suivants : des matériaux contenant du cuivre, des zéolites, du Al₂O₃, du charbon actif.

4. Procédé selon l'une quelconque des revendications précédentes, **caractérisé en ce que** les constituants gazeux emmagasinés dans le récipient intermédiaire sont une ou plusieurs des substances suivantes : CO, eau, méthanol.

5. Procédé selon la revendication 4, **caractérisé en ce que** le récipient intermédiaire comprend plusieurs composants, qui sont optimalisés du point de vue de certains constituants individuels des constituants gazeux à emmagasiner.

6. Procédé selon l'une quelconque des revendications précédentes, **caractérisé en ce que** le composant actif du point de vue catalytique (2) est un brûleur catalytique, un reformeur, une étape en vue de l'oxydation partielle, une étape d'oxydation de CO ou une membrane en vue de la purification de gaz.
